# EUROPEAN PATENT APPLICATION

(11) **EP 1 801 075 A1**
(43) Date of publication of application: **27.06.2007**
(21) Application number: 05405718.7
(22) Date of filing: 22.12.2005
(51) Int. Cl.: C02F 1/04, C02F 103/08

(54) **Method and installation for the desalination of sea water by condensing air moisture**

(71) Applicant: ISCD GmbH, 1792 Cordast (CH)
(72) Inventor: Bürki, Jacqueline Eveline, 1792 Cordast (CH); Tonarelli, Lorenzo, 3653 Oberhofen (CH)
(74) Representative: Frei Patent Attorneys

(57) **Abstract**

Sea water is desalinated by flowing an air stream (A) over a sea water surface (4), wherein water vapour is taken up into the air stream, and by then condensing the water vapour from the air stream by cooling the air stream. The condenser (2) is arranged on the top of a tower (1). The air stream ascends through the tower (1) due to the difference in moisture content between the air stream and ambient air. The tower (1) constitutes the main motor for driving the air stream. The tower (1) may be positioned within an ancillary tower (31) which acts as Venturi increasing the driving head of the tower (1) and/or it may comprise an ancillary fan (30) which according to ambient conditions is operated as fan increasing the driving head of the tower (1) or as power generator being driven by the air stream (A) ascending through the tower (1).

## Description

The invention concerns a method and an installation according to the preambles of the corresponding independent claims. Method and installation serve for desalinating sea water, wherein the term "sea water" is meant to include water having a content of salts (sodium chloride and other water soluble salts) such that it is suitable neither for consumption nor for irrigation and wherein the term "desalination" means producing from such sea water, water with a salt content similar to the salt content of sweet water or drinking water.

According to the state of the art, sea water is desalinated by either multiple distillation (evaporation at a temperature at or above the boiling point) or by reverse osmosis. While both processes are very energy intensive, reverse osmosis furthermore is a slow and highly sophisticated process, which necessitates a lot of sensitive equipment and corresponding care.

It is the object of the invention to provide a method and a device for desalinating sea water, wherein method and device according to the invention are to be workable with energy which is to a very large part naturally available in many locations of the earth and without having to convert such energy and wherein the installation is to be much simpler and much easier to be maintained and handled than known installations serving the same purpose.

This object is achieved by the method and the installation as defined in the claims.

The method according to the invention exploits the fact that water evaporates from a water surface at temperatures below the boiling point at least as long as the atmosphere above the water surface is not saturated with moisture (evaporation below the boiling point), the fact that the more moisture air contains, the lighter it is, and the fact that water condenses from moist air on cooling.

The method according to the invention comprises two main steps: a first main step of taking up water vapour from a water surface by passing an air stream over the water surface and a second main step of cooling the air stream for condensing the water vapour taken up in the first main step. Therein, the main motor for driving the air stream is a tower (chimney) in which the air ascends due to the specific gravity difference between the air stream and ambient air, which difference is produced in the first main step and possibly one or more preliminary steps. The air stream, driven by the aspiration effect of the tower, flows through corresponding conduits over a sea water surface where it is saturated or part saturated with essentially salt-free water vapour evaporating from the see water surface and then it ascends through the tower to the tower top where it is cooled for condensation of desalinated water from the air stream and where the desalinated water is collected.

The tower, which is, from the construction view point, a simple part of the installation as it comprises virtually no moving parts, is, at least for normal operating conditions, the main or even the only motor driving method and installation according to the invention. For increasing the aspiration capacity (driving head) of the tower, it is possible to position the tower within an ancillary tower with a ring-shaped cross section and being equipped for sprinkling ambient temperature air with sea water. The ancillary tower which functions as a per se known cooling tower has a top being designed to function as Venturi and such is able to serve not only for increasing the aspiration capacity of the tower but also for producing cooling water which can be used in the step of condensation. For further increasing the aspiration capacity of the tower in particular in less optimal ambient conditions (e.g. during the night) it is possible to equip the tower with an ancillary fan.

The water surface from which the air stream takes up the water vapour to be condensed at the top of the tower is advantageously situated in the immediate vicinity of the tower base. As the vapour pressure above a water surface is higher at a higher water temperature and as air can take up more water vapour at a higher air temperature, it is advantageous to pre-warm the air stream and/or the sea water before and/or during the passage of the air stream over the sea water surface. Such pre-warming may be accomplished by guiding the air stream and the sea water through channels, which are positioned in the sun and are covered with a material suitable for conducting the sun energy into the channel.

The cooling medium necessary for the condensation step is advantageously sea water being cooled by evaporation, which is advantageously achieved by guiding the air stream (still having a capacity to take up moisture) over the surface of the water to be used as cooling water. As mentioned above cooling water can also be produced in the ancillary tower.

From the above follows that a preferred embodiment of the method according to the invention comprises two main steps and one or more preliminary steps, wherein the main steps are necessary and the preliminary steps are optional and are carried out or not depending on ambient conditions in the location in which the installation is situated. The method steps are the following:
- First preliminary step (optional): pre-warming of sea water and air stream possibly with first take-up of water vapour into the air stream from the sea water surface;
- Second preliminary step (optional): cooling of ambient temperature sea water to be used as cooling water in the step of condensation by guiding the pre-warmed air stream over the surface of the sea water in parallel or counter flow (further take-up of water vapour in the air stream and reduction of water temperature by evaporation);
- Third preliminary step (optional): further pre-warming of the air stream;
- First main step (non-optional): saturating or at least partly saturating the possibly pre-warmed air stream by guiding it over the surface of the possibly pre-warmed sea water (main take-up of water vapour in the air stream);
- Fourth preliminary step (optional): sprinkling the air stream with possibly pre-warmed sea water for further up-take of moisture into the air stream and production of further cooling water;
- Second main step (non-optional): condensing desalinated water from the air stream by cooling the air stream using the cooling water produced in the second and/or fourth preliminary step, in an ancillary tower and/or supplied from outside the installation and collecting the desalinated water.

Whether the four above named preliminary steps, the ancillary cooling tower acting to increase the aspiration capacity and cooling water supply, the ancillary fan and/or supply of cooling water from outside the installation are needed or desirable for achieving a satisfying capacity of the method according to the invention is mainly dependent on parameters such as ambient water and air temperatures, difference between ambient water and air temperatures, ambient air humidity, available amount of sun energy etc. Dimensions and capacity of installation parts designed for main and preliminary method steps are to be adapted also to the named parameters.

The main feature of the installation according to the invention is the tower or chimney, which is the main motor of the installation and drives the air stream and which is a construction somewhat similar to a cooling tower as known from power stations. The tower will usually be tapering towards the top and has a compact mantle. A tower base is equipped with air stream entrances and may also contain means for sprinkling the air stream with further, possibly pre-warmed sea water. The tower top comprises a condenser, which in an upward direction is open to atmosphere and comprises an arrangement of conduits for the cooling water. Outer surfaces of the cooling water conduits, which may be equipped with ribs for enlarging the surfaces, constitute the cooling surface on which the water vapour contained in the air stream ascending through the tower condenses and from which the condensed water falls in drops into correspondingly arranged collecting means.

The water and/or air conduits, which serve the first main step and selected ones of the preliminary steps, are arranged preferably around the tower base, generally leading from different directions towards the tower. The conduits are preferably flat channels made e.g. from metal, plastics or concrete and they are designed for the water to flow in the direction of the air stream (parallel flow) or in an opposite direction (counter flow). The channels are covered preferably with a sheet material suitable for conducting as much energy of the sun light as possible to the channel inside. The channel covers preferably form a sloping roof over the channels, i.e. rise above the channel from both channel sides to meet above the channel in a highest point. This means that the channel covers slope preferably to both channel sides such that water condensing on the inside surface of the channel covers can be collected in grooves arranged on both channel sides.

Method and installation according to the invention are further described in connection with the following Figs., wherein,
- **Fig. 1**: shows the main parts of the installation according to the invention;
- **Figs. 2 and 3**: show the main parts of a preferred embodiment of the installation according to the invention;
- **Fig. 4**: shows a diagram of an exemplary embodiment of the installation according to the invention;
- **Fig. 5**: shows a diagram of the installation of Fig. 4, which is further equipped for supply of external cooling water;
- **Figs. 6 and 7**: show preferred embodiments of the installation according to the invention.

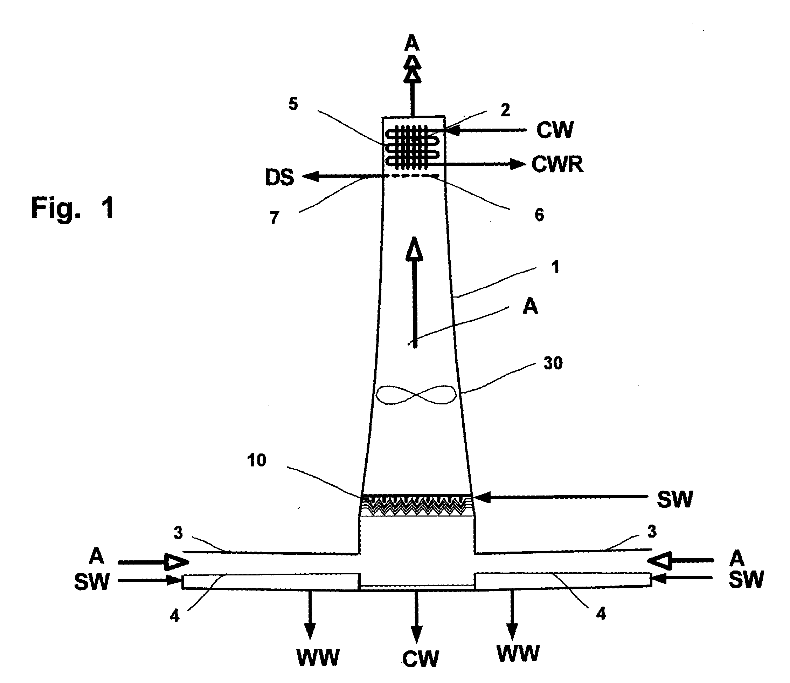

**Figure 1** shows in a very schematic way the main parts of the installation according to the invention, namely a tower 1 with a condenser 2 arranged at the top of the tower and a channel arrangement 3 designed for guiding the air stream (arrows A) to the tower base over a surface 4 of preferably pre-warmed sea water which is maintained by a sea water stream (arrows SW). The tower 1 is preferably a hollow concrete construction tapering towards the top. The air stream A is aspirated by the tower through the channel arrangement and ascends through the tower and through the condenser 2 at the top of the tower. The condenser 2 comprises an arrangement of cooling conduits 5 through which cooling medium is pumped, preferably precooled sea water (arrows CW and CWR). The condenser 2 further comprises collecting means 6 (collecting channels or perforated collecting trays) and removal means 7 for collecting and removing condensed desalinated water (arrow DS).

The channel arrangement 3 comprises channels which may slightly slope towards the tower base and are covered with a transparent sheet material. The installation further comprises means for pumping (not shown in Fig. 1) sea water into the channel arrangement to flow at little speed through the channel arrangement in the same direction as the air stream. In the tower base sprinkler means 10 may be provided which sprinkle preferably pre-warmed sea water (SW) into the ascending air stream for further increasing the water vapour content of the air stream. The sea water used for sprinkling in the tower is cooled through evaporation and may be supplied to the condenser 2 as cooling water CW. Water (WW) exiting the channel system has an increased salt content and may be supplied to a plant for salt manufacturing.

Figure 1 also shows an ancillary fan 30 mounted in the tower. This fan is preferably designed for being operated according to ambient conditions either as fan for increasing the driving power of the tower 1 (increase of the driving head of the tower) or as power generator being driven by the air stream ascending through the tower 1.

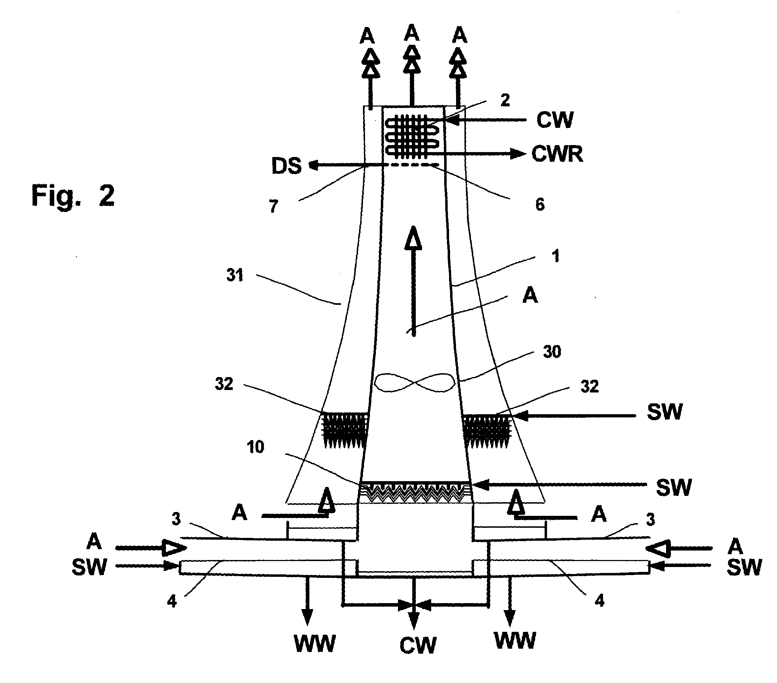

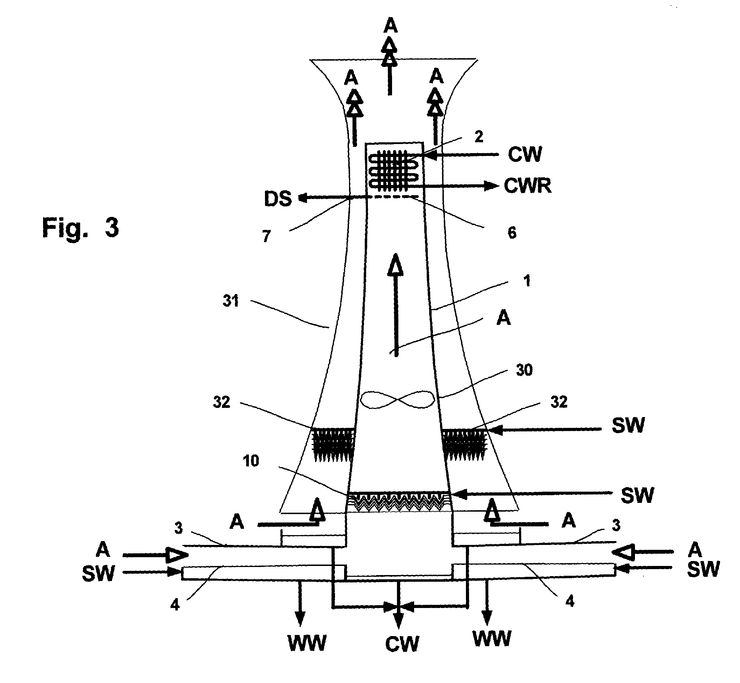

**Figures 2 and 3** show preferred embodiments of the tower driving the installation according to the invention. Same elements are designated with same reference numerals as in Fig. 1. In addition to the tower 1 illustrated in Fig. 1, the tower according to Figs. 2 and 3 is a double tower, i.e. the tower 1 is positioned within an ancillary tower 31 having a ring-shaped cross section which gets narrower towards the top of the tower and such acts as Venturi increasing the driving head of the tower 1. The ancillary tower 31 has at least the same height as the tower 1 and comprises in its base region sprinkler means 32 for sprinkling the air ascending through the ancillary tower with sea water (arrow SW) having an ambient temperature. Through the sprinkling the air takes up water vapour reducing the density of the air and making it rise in the ancillary tower and the water temperature is reduced such that the water exiting the ancillary tower 31 can be used as cooling water (CW) in the step of condensation.

The top of the double tower (1 and 31) according to Fig. 2 is just tapering, the two towers having substantially the same height, whereas according to Fig. 3 the ancillary cooling tower 31 has a top section which surmounts the tower 1 and flares outwards such increasing the Venturi action.

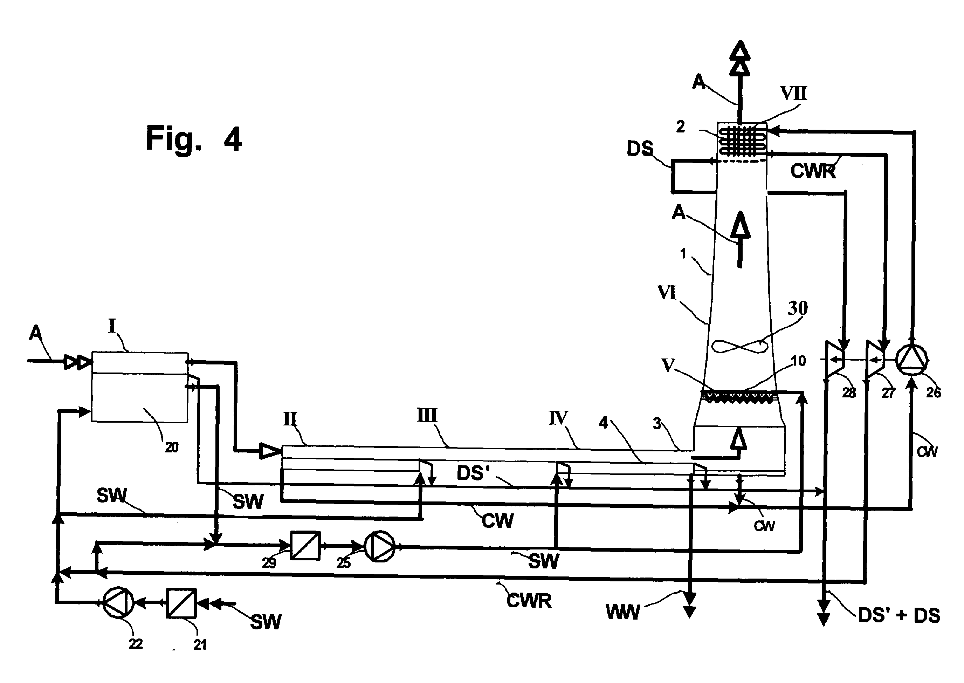

**Figure 4** is a diagram of an exemplary embodiment of the installation according to the invention. The main parts of the installation are essentially the same as already discussed in connection with Fig. 1 and they are designated with the same reference numerals. Fig. 4 illustrates installation parts I to VII which are equipped for carrying out a method step each.

Installation part I is equipped for carrying out the first preliminary method step, i.e. for pre-warming sea water (SW) and air stream (A). Installation part I comprises a sea water pool 20 to which filtered sea water is pumped (filter 21 and sea water pump 22) and through which the air stream aspired by the tower 1 is guided. The pool 20 is dimensioned such that it constitutes a store of pre-warmed sea water for being desalinated also in time periods without sunshine. The pool 20 is covered with a transparent sheet material forming a sloping roof for being suitable for desalinated water (DS') condensing on the inside of the cover to be collected.

Installation part II is equipped for carrying out the second preliminary method step, i.e. for producing cooling water (CW). Installation part II comprises channels in which the pre-warmed air stream A aspired by the tower 1 is guided over a sea water surface (at ambient temperature) in parallel or counter flow. As for installation part I, the channels are covered with a transparent sheet material forming a sloping roof, from which condensed and therefore desalinated water (DS') is collected.

Installation part III is equipped for carrying out the third preliminary method step, i.e. for further warming the air stream (A) aspired by the tower 1. Installation part III comprises air conduits of a material suitable for collecting sun energy the conduits being arranged in the sun.

Installation part IV is equipped for carrying out the first main method step, i.e. saturating or at least partly saturating the air stream A with water vapour. Installation part IV comprises channels through which the further warmed air stream A aspired by the tower 1 is guided and through which pre-warmed sea water SW is pumped (further sea water pump 25) from the pool of installation part I to flow through the channels in the same direction as the air stream A. The sea water to be supplied to installation part IV may be supplemented with cooling water returned from the condenser, wherein it may be necessary to install a furhter filter 29 upstream of the further sea water pump 25.

The channels of installation part IV are again covered with a transparent sheet material forming a sloping roof and desalinated water DS' condensed on the sheet material is collected.

Installation part V is equipped for carrying out the forth preliminary method step, i.e. sprinkling the at least partly moisture saturated and warmed air stream A with pre-warmed sea water SW pumped from the pool of installation part I and/or with cooling water returned from the condenser 2. The sea water may be sprinkled onto a layer of filling bodies constituting a large water covered surface. The sea water exiting the filling layer is cooled by evaporation and can therefore be used as cooling water CW for the condenser.

Installation part VI is the tower which is the main motor for driving the air stream A through installation parts I to V.

Installation part VII is equipped for carrying out the second main method step, i.e. condensing water vapour from the air stream and collecting desalinated water DS. The condenser and the tower on the top of which the condenser is mounted have been described in connection with Fig. 1. The cooling water CW used in the condenser is pumped (cooling water pump 26) to the top of the tower wherein the necessary energy is at least partly gained by turbines 27 and 28 which are driven by the cooling water CW and the desalinated water DS descending from the top of the tower. The cooling water is supplied from installation part II and may be supplemented by the sprinkling water collected at the tower base.

The desalinated water DS collected in the condenser is united with the desalinated water DS' collected from the various sheet materials covering channels and pool and the combined desalinated water constitutes the product of the installation. It is shown that the water WW at the exit of the installation can easily contain four times more salt than the sea water pumped into the installation which means that about three quarters of the sea water pumped into the installation is converted into desalinated water on being passed through the desalination installation according to the invention.

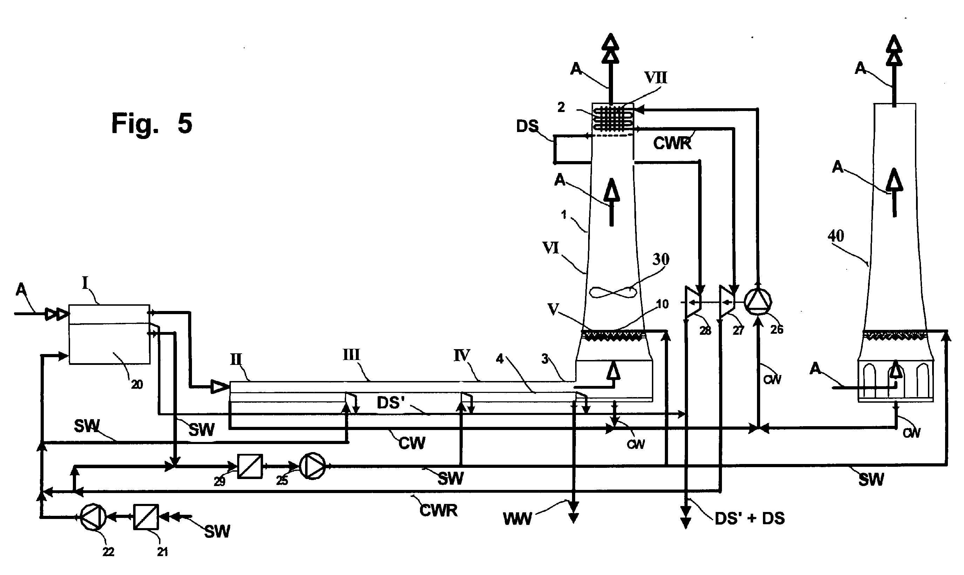

**Figure 5** shows substantially the same installation as Fig. 4, wherein the installation according to Fig. 5 is equipped for additional cooling water supply from outside of the installation, e.g. from a separate cooling tower 40, in which cooling water returned from the condenser and/or sea water SW is supplied and in which cooling water CW is produced by sprinkling air A ascending in the cooling tower 40 with the supplied sea water.

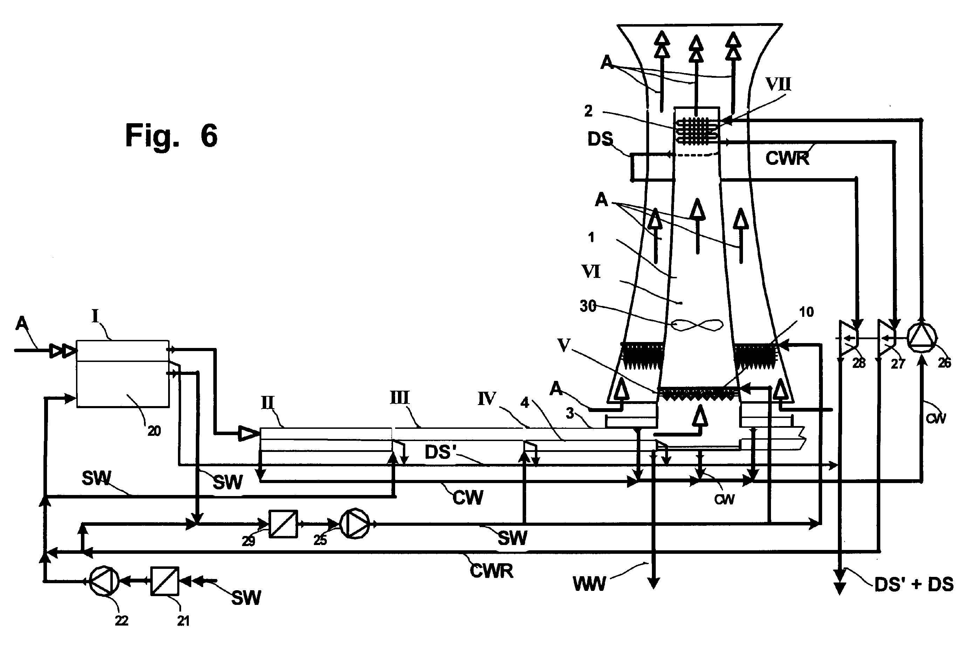

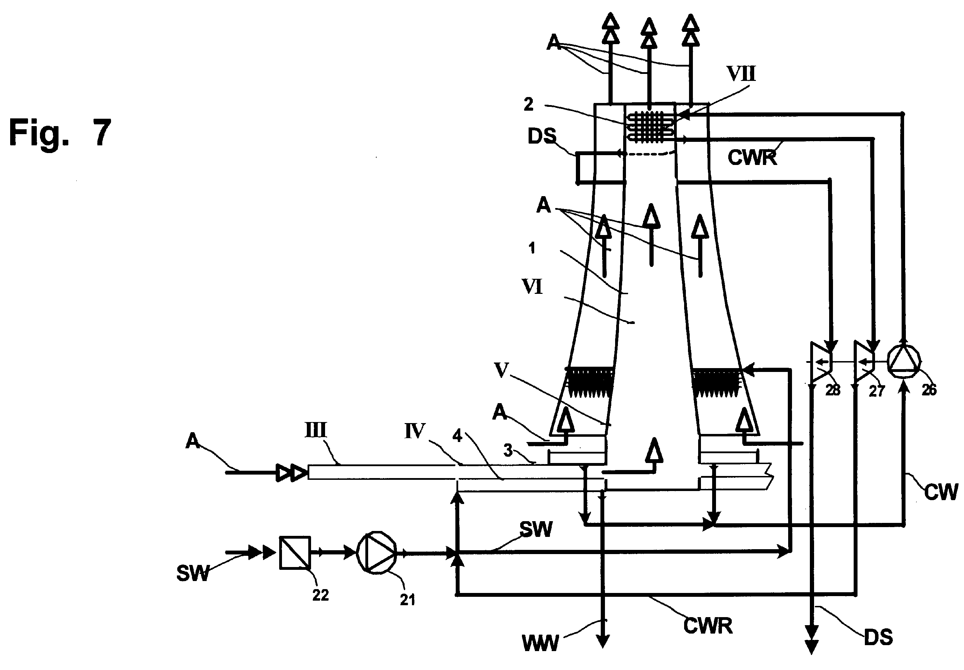

**Figures 6 and 7** illustrate the preferred embodiment of the installation according to the invention, which comprises as motor the double tower as described in connection with Figs. 2 and 3 and therefore does not need any external cooling water supply.

### Example

An installation substantially as illustrated in Fig. 7 and covering a surface area of 500 x 1000 m with the double tower situated in the middle of the area comprises 450 channels of 2.2 m width and of 220 m length each. The channels extend in parallel on two sides towards the tower. Each channel comprises a channel section of installation part III (length 50 m) and a channel section of installation part IV (length 150 m). The tower which does not comprise neither ancillary fan nor sprinkling means has a height of 100 m and is surrounded by an ancillary tower acting as Venturi.

If the installation is run at the ambient conditions A, B and C as shown in the following table, the installation has a capacity of 313 kg/h at conditions A, of 171 kg/h at conditions B and of 30 kg/h at conditions C, wherein the capacities are calculated as a mean value for ambient relative air humidities of 20%, 40% and 60%. At the assumed daily duration for conditions A of 4 h, conditions B of 8 h and conditions C of 12 h, the daily output of the installation is 1343 m³ per day.

### Assumed ambient conditions:

| Ambient condition type | A | B | C |
|---|---|---|---|
| Daily duration | 4 h | 8 h | 12 h |
| Sea water temperature | 25°C | 20°C | 15°C |
| Air temperature | 40°C | 30°C | 10°C |
| Sun radiation energy | 500 W/m² | 300 W/m² | 50 W/m² |

## Claims

1. Method for the desalination of sea water (SW) comprising a step of taking up salt-free water vapour from the sea water in an air stream (A) by flowing the air stream (A) over a surface (4) of the sea water (SW) and a step of condensing water vapour from the air stream (A) by cooling the air stream and collecting desalinated water (DS), wherein the air stream (A) is driven through the step of taking up and the step of condensing and collecting by a tower (1), the air stream entering the tower (1) at a tower base after the step of taking-up and ascending through the tower to a tower top for the step of condensing and collecting.

2. Method according to claim 1, wherein the tower (1) is located within an ancillary tower (31), the ancillary tower constituting a chimney having a ring-shaped cross section, having entrances for ambient temperature air at its base, being open at the top and acting a Venturi and wherein the air ascending through the ancillary tower (31) is sprinkled with sea water (SW).

3. Method according to one of claims 1 or 2, wherein an ancillary fan (30) is mounted in the tower (1), the fan (30) being able to be operated according to ambient conditions either as a fan to increase the driving head of the tower (1) or as power generator being driven by the air stream (A) ascending through the tower (1).

4. Method according to one of claims 1 to 3, wherein, before the step of taking-up, the sea water (SW) to be desalinated and/or the air stream (A) is pre-warmed by exposure to sunshine.

5. Method according to one of claims 1 to 4, wherein sea water (SW) is sprinkled into the air stream (A) in the base of the tower (1).

6. Method according to one of claims 1 to 5, wherein a cooling medium (CW) used in the step of condensing is sea water (SW), which is cooled by being contacted with the air stream (A) in parallel or counter flow in channels or being sprinkled into the air stream (A) in the tower or in the ancillary tower (31).

7. Method according to claim 6, wherein the sea water used as cooling medium (CW) is pumped to the condenser (2) using energy gained from the cooling medium (CW) and/or the collected desalinated water (DS) descending from the tower top and/or from the fan (30) being operated as power generator.

8. Method according to one of claims 1 to 7, wherein further desalinated water (DS') is collected from sheet material forming sloping roofs over channels and pools in which the sea water (SW) to be desalinated and/or the air stream (A) is conducted or stored.

9. Installation for the desalination of sea water (SW), which installation comprises a tower (1) having a base and a top, channels for guiding an air stream (A) in contact with a salt water surface (4) to the base of the tower, and a condenser (2) and collecting means (6) for condensing water vapour from the air stream (A) by cooling the air stream and collecting desalinated water (DS) at the top of the tower (1), wherein the tower is suitable for driving the air stream (A) through the channels and the condenser (2).

10. Installation according to claim 9, wherein the tower (1) is located within an ancillary tower (31), the ancillary tower constituting a chimney having a ring-shaped cross section, having entrances for ambient temperature air at its base, being open at the top, being designed as Venturi and comprising sprinkling means (32).

11. Installation according to claim 9 or 10, wherein the ancillary tower (31) has the same height as the tower (1).

12. Installation according to claim 9 or 10, wherein the ancillary tower (31) surmounts the tower (1) and wherein the top of the ancillary tower (31) is flaring outwards.

13. Installation according to one of claims 9 to 12, wherein an ancillary fan (30) is provided within the tower (1) and wherein the ancillary fan (30) is operable either as fan for increasing the driving head of the tower (1) or as power generator being driven by the air stream (A) ascending through the tower (1).

14. Installation according to one of claims 9 to 13 and further comprising sprinkler means (10) at the base of the tower (1).

15. Installation according to one of claims 9 to 14, and further comprising channels for pre-warming the sea water to be desalinated and/or the air stream by being exposed to sunlight.

16. Installation according to one of claims 9 to 15, and further comprising channels for contacting the air stream (A) with sea water (SW) in parallel or counterflow for producing cooled sea water to be used as cooling medium (CW).

17. Installation according to one of claims 9 to 16, and further comprising a pool for storing sea water (SW) and for pre-warming the sea water (SW) and the air stream (A), which pool is equipped with a filter (21) and a pump (22) for the sea water supply.

18. Installation according to one of claims 9 to 17, wherein at least part of the channels and/or the pool are covered with a sheet material forming a sloping roof and being equipped with collecting means for collecting desalinated water (DS') condensing on the sheet material.
